# EUROPEAN PATENT APPLICATION

(11) **EP 0 760 568 A1**
(43) Date of publication of application: **05.03.1997**
(21) Application number: 96305133.9
(22) Date of filing: 12.07.1996
(51) Int. Cl.: H04L 29/06, H04M 11/08

(54) **Internet access apparatus**

(30) Priority: 03.08.1995 GB 9515949
(71) Applicant: INTERNATIONAL COMPUTERS LIMITED, Putney, London, SW15 1SW (GB)
(72) Inventor: Rollisson, Mark, Burnley, Lancashire BB11 3EE (GB)
(74) Representative: Guyatt, Derek Charles

(57) **Abstract**

A dedicated Internet access apparatus comprises a microprocessor, a modem for connecting the microprocessor to a telecommunications line, and a read-only memory (ROM) for storing programs for operating the microprocessor. The ROM contains programs for accessing the Internet. The apparatus also has an input device, such as a keyboard connected to the microprocessor by an infrared link. The microprocessor, modem and ROM are all packaged as a single module. The apparatus may use a standard television set as a display device.

## Description

### Background to the invention

This invention relates to apparatus for accessing the Internet and its services.

The Internet is a worldwide network of computers which can communicate with each other, over public and private links. The number of subscribers is currently estimated to be in excess of 30 million people. The Internet offers the following four main features.
1. E-Mail.
   The Internet allows users to send and receive electronic mail messages, by way of gateways.
2. General Interests.
   The Internet also allows users to "browse" through information made available by others. Navigating around the Internet may be conducted via a standard interface that uses Hypertext Markup Language (HTML). In essence this provides a structure and common method for the linking of pieces of related information using a simple point and click interface. General information on a variety of subjects can be retrieved in this manner.
3. File Downloading.
   The Internet also allows users to download files provided by other users. These files include applications, graphics, video, sound, games and text files.
4. Discussion Forums.
   The Internet also offers a number of forums for real time, one-to-one or one-to-many, virtual conversations across global boundaries, without employing e-mail technologies.

At present, in order to gain access to the Internet, it is necessary to use a general purpose computer, such as a personal computer (PC), along with appropriate hardware (such as a modem) and software. Such equipment is relatively expensive and sophisticated, and necessitates a certain degree of expertise on the part of the user. These are a barrier to the ability of the general public to access the Internet and to benefit from its services.

The object of the present invention is to provide a way of overcoming these problems, so as to make the Internet more readily accessible.

### Summary of the Invention

According to the present invention there is provided Internet access apparatus comprising:
(a) a microprocessor;
(b) a modem for connecting said microprocessor to a telecommunications line;
(c) a read-only memory (ROM) for storing programs for operating said microprocessor, including programs for accessing the Internet; and
(d) an input device for allowing a user to communicate with said microprocessor;
(e) said microprocessor, modem and ROM all being packaged as a single module.

### Brief Description of the Drawings

Figure 1 is a block diagram of an Internet access apparatus.
Figure 2 shows a Configure screen.
Figure 3 shows a Send Mail screen.
Figure 4 shows a Stored Messages screen.
Figure 5 shows a Database screen.
Figure 6 shows a Data screen.

### Description of an Embodiment of the Invention

One Internet access apparatus in accordance with the invention will now be described by way of example with reference to the accompanying drawings.

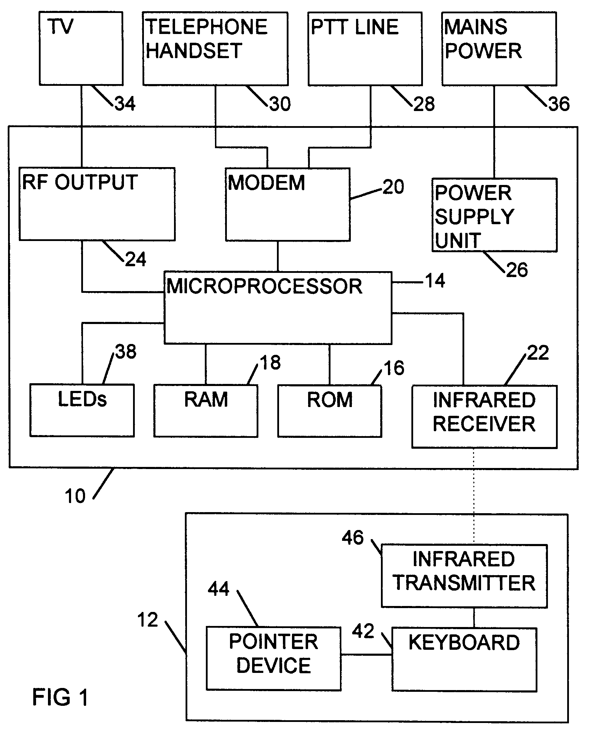

Referring to Figure 1, the apparatus comprises two modules: a console 10, and a keyboard unit 12.

The console 10 comprises a housing, containing a microprocessor 14, connected to a read-only memory (ROM) 16, a random access memory (RAM) 18, a modem 20, an infrared receiver circuit 22, and an RF output circuit 24. The housing also includes a power supply unit 26 for supplying electrical power to the other components.

The ROM 16 stores all the operating programs for the microprocessor, including programs for displaying menus and data entry screens (as described below) and programs for accessing Internet services.

The RAM 18 is used as a temporary working store by the microprocessor. It is also used to hold configuration data for the console, including the user's personal details. The RAM is also used to store an address list database, containing a number of entries holding names and e-mail addresses. The RAM is battery-backed, so that its contents are preserved even when the console is powered down.

The modem 20 is connected to an external PTT socket, through which it can be connected by a cable to a public telephone line 28. The modem is also connected to a telephone socket, to which a telephone handset 30 can be connected. This allows the telephone to be used in the normal manner when the line is not being used for Internet access.

The RF output circuit 24 is connected to a coaxial RF socket and also to a SCART socket. These allow the console to be connected to a standard television 34 using a cable from either the coaxial RF socket or the SCART socket. The TV would be tuned to a spare channel or auxiliary channel, and serves as a display for displaying information to the user.

The power supply unit 26 is connected to a power supply socket, which can be connected by a cable to a mains power supply 36.

The console 10 also includes a number of light-emitting diodes (LEDs) 38, mounted on the front face of the housing, and connected to the microprocessor. These are used to indicate the status of the console.

The keyboard unit 12 comprises a conventional keyboard 42, containing both QWERTY keys and a numeric keypad. The keyboard unit also includes a pointer device 44, such as a trackball or mouse. The keyboard can be connected to the microprocessor 14 in a conventional manner, by way of a cable and a suitable I/O circuit (not shown) in the console 10. The keyboard unit also includes an infrared transmitter 46, which transmits information entered via the keyboard or pointer device to the infrared receiver 22 on the console. Thus, the keyboard can be connected to the console either by a cable or by a cordless infrared link.

One of the keys on the keyboard serves a special function as a SETUP key. This may be a specially dedicated key, or may be one of the QWERTY keys. In operation, pressing the SETUP key causes the microprocessor to display a Help Screen on the TV.

The Help Screen contains the following options:
1. Dial Internet
2. Database
3. E-mail
4. Configure

When the Help screen is displayed, any one of these options can be selected by pressing one of the numeric keys 1-4.

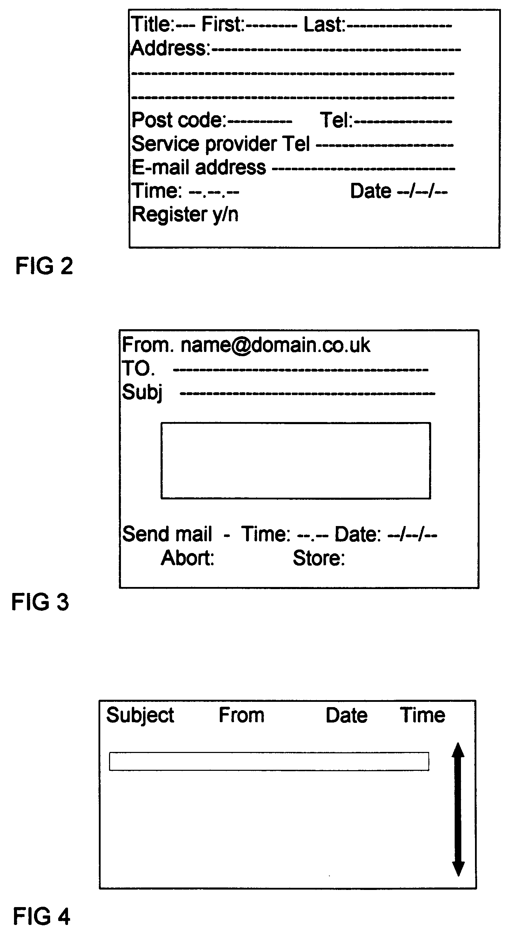

Selecting option 4 (configure) from the Help screen causes a Configure screen to be displayed, as shown in Figure 2. The Configure screen allows the user to configure the console, by prompting the user to enter his or her details, using the keys on the keyboard. In particular, the user must enter his or her personal e-mail address in the Configure screen. This will have been supplied by the chosen Internet service provider. When the details have been entered, the user may select a Register option box on the screen, by pointing and clicking, using the pointer device. This causes the console to register the user details in its memory and then to return to the Help screen.

Selecting option 1 (Dial Internet) from the Help screen causes the console to automatically dial a pre-defined number to access the Internet service. When communication with the service has been established all further requests for information are displayed on the TV screen and the user can enter the information using the keyboard. The console is capable of interpreting HTML.

Selecting option 3 (E-mail) from the Help screen causes an E-mail menu to be displayed. The E-mail menu contains the following options:
1. Send mail
2. View mail

When the E-mail menu is displayed, either of these options can be selected by pressing one of the numeric keys 1-2.

Selection of option 1 (send mail) from the E-mail menu causes a Send Mail screen to be displayed, as shown in Figure 3. The Send Mail screen includes a From field, into which the console automatically enters the user's personal address, previously entered by way of the Configure screen. The Send Mail screen also includes a To field and a Subject field. The console automatically prompts the user to enter a valid e-mail address and a subject header into these fields. The Send Mail screen also includes a message box, in which the user can construct a message, using the keyboard. The Send Mail screen also includes time and date fields: these default to the current time and date, but can be changed by pointing and clicking.

The Send Mail screen also includes the following option boxes which can be selected by pointing and clicking:
- Send mail: this option causes the e-mail to be sent to the specified e-mail address. The console then returns to the Help screen.
- Store: selection of this option causes the e-mail to be stored in RAM. The console then returns to the Help screen.
- Abort: selection of this option causes the console to return to the Help screen, without sending or storing the e-mail.

Selection of option 2 (view mail) from the E-mail menu causes a Stored messages screen to be displayed, as shown in Figure 4. The Stored Messages displays the subject fields of a number of stored messages. The messages can be selected by moving a highlighter bar up and down by pointing and clicking on up and down arrows on a scroll bar. When a message has been highlighted it can be viewed by pointing and clicking on the highlighter bar. The message will indicate whether it is unread or read.

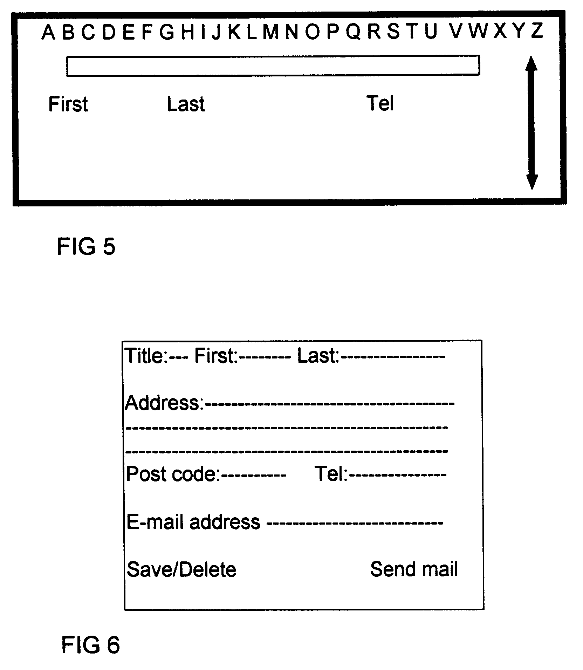

Selecting option 2 (Database) from the Help screen causes a Database screen to be displayed, as shown in Figure 5. The database screen includes a header, containing the letters A-Z. The user can select a letter by pointing and clicking. When a letter is selected, the console displays, in an abbreviated form, a list of database entries whose last name field matches the selected letter. This list can then be scrolled by pointing and clicking on an up and down arrow. Pointing and clicking on the highlighted item causes a Data screen to be displayed, showing the current contents of the selected database entry. Alternatively, moving to a blank area of the Database screen and pressing the Enter key causes a blank Data screen to be displayed, allowing a new database entry to be created.

As shown in Figure 6, the Data screen comprises fields for title, first name, last name, address, post code, telephone number, and e-mail address. These fields may be selecting for editing by pointing and clicking. The Data screen also contains Save, Delete and Send option boxes, which can be selected by pointing and clicking.

Selection of the Save option causes the details entered in the fields to be stored in the database in memory. Selection of the Delete option causes the currently selected entry to be deleted from the database. In both of these cases, the console then returns to the Help screen. Selection of the Send option causes the console to display the Send Mail screen, with the details from the database entry inserted in the To field.

### Some Possible Modifications

It will be appreciated that many modifications may be made to the apparatus as described above without departing from the scope of the present invention. For example, instead of using a conventional TV as its output device, the apparatus may use a VDU monitor.

In the embodiment described above, the console and keyboard are separate units and use a separate display unit (in this example, a TV). However, in other forms of the invention, the console and keyboard could be combined within a single housing. Alternatively, the console may be combined in the same housing as the display unit.

The apparatus may also be provided with facilities for connecting peripheral devices such as a printer.

## Claims

1. Internet access apparatus comprising:
(a) a microprocessor (14);
(b) a modem (20) for connecting said microprocessor to a telecommunications line;
(c) a read-only memory (ROM) (16) for storing programs for operating said microprocessor, including programs for accessing the Internet; and
(d) an input device (12) for allowing a user to communicate with said microprocessor;
(e) said microprocessor, modem and ROM all being packaged as a single module (10).

2. Apparatus according to Claim 1, including means (24) for connecting the apparatus to an external display device.

3. Apparatus according to Claim 2 wherein said means for connecting the apparatus to an external display device comprises a radio frequency output circuit (24), and said external display device comprises a television set (34).

4. Apparatus according to any preceding claim further including means for storing e-mail addresses in an address list database.

5. Apparatus according to Claim 4 further including means for using an e-mail address stored in said database as a destination address for sending an e-mail.

6. Apparatus according to any preceding claim wherein said input device is a keyboard unit (42), connected to said microprocessor by means of an infrared link (46).
